# EUROPEAN PATENT SPECIFICATION

(11) **EP 3 809 687 B1**
(45) Date of publication and mention of the grant of the patent: **15.06.2022**
(21) Application number: 19203161.5
(22) Date of filing: 15.10.2019
(51) Int. Cl.: H04N 5/232

(54) **METHOD AND SYSTEM FOR REAL TIME VIDEO STABILIZATION**
VERFAHREN UND SYSTEM ZUR ECHTZEIT-VIDEOSTABILISIERUNG
PROCÉDÉ ET SYSTÈME DE STABILISATION DE VIDÉO EN TEMPS RÉEL

(43) Date of publication of application: 21.04.2021
(73) Proprietor: Rohde & Schwarz GmbH & Co. KG, 81671 München (DE)
(72) Inventor: Ibl, Harald, 85643 Steinhoering (DE); Jones, Doug, Columbia, MD 21046 (US); Chandran, Meera, 63452 Hanau (DE); Bartko, Dr., Hendrik, 82008 Unterhaching (DE)
(74) Representative: Rupp, Christian

(56) References cited:
- WO-A1-2009/024349
- TARAK GANDHI, MOHAN M. TRIVEDI: "Motion analysis of omni-directional video streams for a mobile sentry", IWVS'03 - ACM, 2 PENN PLAZA, SUITE 701 - NEW YORK USA, 7 November 2003 (2003-11-07), pages 49-58, XP040178101, Berkeley, California
- MORIMOTO C ET AL: "Detection of independently moving objects in passive video", INTELLIGENT VEHICLES '95 SYMPOSIUM., PROCEEDINGS OF THE DETROIT, MI, USA 25-26 SEPT. 1995, NEW YORK, NY, USA,IEEE, US, 25 September 1995 (1995-09-25), pages 270-275, XP010194128, DOI: 10.1109/IVS.1995.528292 ISBN: 978-0-7803-2983-6
- MOHAMMAD S ALAM ET AL: "Improved Multiple Target Tracking via Global Motion Compensation and Optoelectronic Correlation", IEEE TRANSACTIONS ON INDUSTRIAL ELECTRONICS, IEEE SERVICE CENTER, PISCATAWAY, NJ, USA, vol. 54, no. 1, 1 February 2007 (2007-02-01), pages 522-529, XP011163566, ISSN: 0278-0046, DOI: 10.1109/TIE.2006.885513

## Description

The invention relates to a method and a system for real time video stabilization.

Generally, in times of an increasing number of applications employing multiple electrical circuits, there is a growing need of performing tests with respect to electromagnetic compatibility. In this context of testing and in many cases, the respective device under test comprising such applications has to be monitored with the aid of a video camera in order to verify the correct functioning of said device under test. Due to the fact that the device under test is sometimes exposed to movements or vibrations, said optical verification may fail especially in the case that it has not been compensated for such movements or vibrations.

US 5,973,733 A relates to a system for stabilizing a video recording of a scene made with a video camera. The video recording includes video data and audio data. The system includes source frame storage for storing source video data as a plurality of sequential frames. The system also includes a processor for detecting camera movement occurring during recording and for modifying the video data to compensate for the camera movement. Additionally, the system includes destination frame storage for storing the modified video data as plurality of sequential frames. Disadvantageously, with the aid of said system, exclusively the image of the video camera is stabilized. In other words, stabilization is solely done with respect to an undesired movement of the camera itself, whereas said system cannot compensate for a movement or vibration of an object to be recorded.

Accordingly, there is the object to provide a method and a system for real time video stabilization, each of which allows for compensating for movements and/or vibrations of a device under test in a highly efficient and accurate manner.

This object is solved by the features of the independent claims. The dependent claims contain further developments.

According to a first aspect of the invention, a method for real time video stabilization is provided. The method comprises the steps of monitoring a region to be monitored with respect to a device under test with the aid of a video camera of a measurement system, defining at least one reference region in the region to be monitored, and using the at least one reference region for vibration and/or movement compensation. Advantageously, movements and/or vibrations of the device under test can be compensated in a highly efficient and accurate manner.

The method further comprises the step of monitoring at least one region of interest with the aid of the video camera. Advantageously, for instance, accuracy and efficiency can further be increased.

At least one of the region to be monitored, the device under test, the video camera, the at least one region of interest, or any combination thereof is subject to vibrations. Advantageously, for example, flexibility can be increased, thereby increasing efficiency.

The device under test comprises the region to be monitored. Advantageously, for instance, complexity can be reduced, which leads to an increased efficiency.

According to a further preferred implementation form of the first aspect of the invention, the device under test comprises or is a vehicle with a dash board to be monitored or a home appliance with a display to be monitored, in particular a home appliance subject to vibration during use, in particular a washing machine, dryer, kitchen machine, etc. Advantageously, for example, different use cases are supported in a flexible manner.

According to a further preferred implementation form of the first aspect of the invention, the method further comprises the step of choosing the size of the at least one reference region depending on the computation speed of the measurement system. Advantageously, for instance, efficiency can further be increased.

According to a further preferred implementation form of the first aspect of the invention, the method further comprises the step of choosing the size of the at least one reference region depending on the maximum amplitude of respective vibration and/or movement. Advantageously, for example, accuracy can further be increased.

The method further comprises the step of marking the at least one reference region with a sticker. Advantageously, for instance, efficiency can further be increased.

According to a further preferred implementation form of the first aspect of the invention, the sticker comprises or depicts a cross hair. Advantageously, for example, complexity can further be reduced.

According to a further preferred implementation form of the first aspect of the invention, the at least one reference region is different from the at least one region of interest. Additionally or alternatively, the at least one region of interest comprises or is a light, preferably a warning light, more preferably a light on a dash board, most preferably a warning light on a dash board. Advantageously, for instance, inefficiency can further be reduced.

According to a further preferred implementation form of the first aspect of the invention, the at least one reference region is used for vibration and/or movement compensation with respect to the at least one region of interest. Advantageously, for example, complexity can further be reduced, which leads to an increased efficiency.

According to a further preferred implementation form of the first aspect of the invention, the method further comprises the step of interpolating the vibration and/or movement compensation with respect to the at least one region of interest preferably in the case that there are defined at least two reference regions. Advantageously, for instance, efficiency can further be increased.

The method further comprises the step of warning a user if the at least one region of interest is too small for the respective amplitude of vibration and/or movement. Additionally or alternatively, the method further comprises the step of warning a user if at least one of the region to be monitored, the at least one reference region, the at least one region of interest, or any combination thereof is too big for vibration and/or movement compensation in real time. Further additionally or further alternatively, the method further comprises the step of determining the maximum amplitude of respective vibration and/or movement and/or the maximum of the image refresh rate with respect to the video camera preferably on the basis of the total size of corresponding measurement regions with respect to vibration and/or movement. Advantageously, for example, not only efficiency but also accuracy can further be increased.

According to a further preferred implementation form of the first aspect of the invention, the method further comprises the step of proposing the optimum size and/or the optimum position of corresponding measurement regions with respect to vibration and/or movement to a user for real time image processing preferably on the basis of the performance capability of the measurement system. Advantageously, for instance, efficiency can further be increased.

According to a second aspect of the invention, a system for real time video stabilization is provided.

Exemplary embodiments of the invention are now further explained with respect to the drawings by way of example only, and not for limitation. In the drawings:
- Fig. 1: shows a flow chart of an embodiment of the first aspect of the invention;
- Fig. 2: shows a flow chart of a further embodiment of the first aspect of the invention;
- Fig. 3: shows a flow chart of a further embodiment of the first aspect of the invention; and
- Fig. 4: shows an exemplary embodiment of the second aspect of the invention.

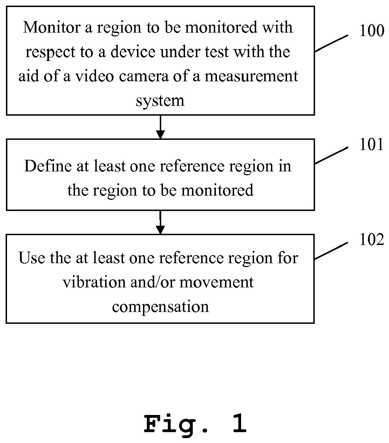

Firstly, Fig. 1 shows a flow chart of an embodiment of the inventive method for real time video stabilization. In a first step 100, a region to be monitored with respect to a device under test is monitored with the aid of a video camera of a measurement system. Then, in a second step 101, at least one reference region is defined in the region to be monitored. Furthermore, in a third step 102, the at least one reference region is used for vibration and/or movement compensation.

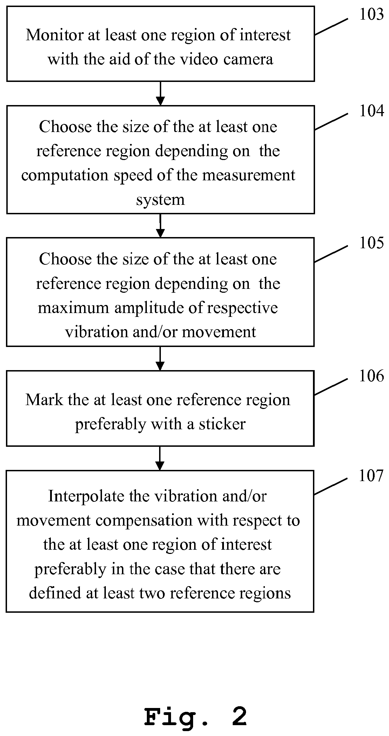

In accordance with step 103 of Fig. 2, it is noted that it might be particularly advantageous if the method further comprises the step of monitoring at least one region of interest with the aid of the video camera.

It is further noted that at least one of the region to be monitored, the device under test, the video camera, the at least one region of interest, or any combination thereof may especially be subject to moving and/or vibrations.

Furthermore, the device under test may preferably comprise the region to be monitored. In addition to this or as an alternative, the device under test may especially comprise or be a vehicle with a dash board to be monitored or a washing machine with a display to be monitored.

According to step 104 of Fig. 2, the method may further comprise the step of choosing the size of the at least one reference region depending on the computation speed of the measurement system. Moreover, in accordance with step 105 of Fig. 2, the method may further comprise the step of choosing the size of the at least one reference region depending on the maximum amplitude of respective vibration and/or movement.

Furthermore, according to step 106 of Fig. 2, the method comprises the step of marking the at least one reference region with a sticker. In this context, it might be particularly advantageous if the sticker comprises or depicts a cross hair.

With respect to the at least one reference region and the at least one region of interest, it is noted that the at least one reference region may especially be different from the at least one region of interest. In addition to this or as an alternative, the at least one region of interest may especially comprise or be a light, preferably a warning light, more preferably a light on a dash board, most preferably a warning light on a dash board.

Further additionally or further alternatively, the at least one reference region may especially be used for vibration and/or movement compensation with respect to the at least one region of interest. Moreover, according to step 107 of Fig. 2, the method may further comprise the step of interpolating the vibration and/or movement compensation with respect to the at least one region of interest preferably in the case that there are defined at least two reference regions.

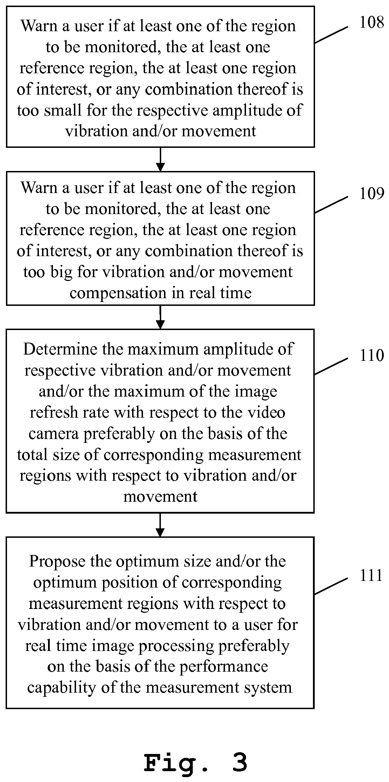

Furthermore, in accordance with step 108 of Fig. 3, the method further comprises the step of warning a user if at least one of the region to be monitored, the at least one reference region, the at least one region of interest, or any combination thereof is too small for the respective amplitude of vibration and/or movement.

In addition to this or as an alternative, according to step 109 of Fig. 3, the method may further comprise the step of warning a user if at least one of the region to be monitored, the at least one reference region, the at least one region of interest, or any combination thereof is too big for vibration and/or movement compensation in real time.

Further additionally or further alternatively, in accordance with step 110 of Fig. 3, the method may further comprise the step of determining the maximum amplitude of respective vibration and/or movement and/or the maximum of the image refresh rate with respect to the video camera preferably on the basis of the total size of corresponding measurement regions with respect to vibration and/or movement.

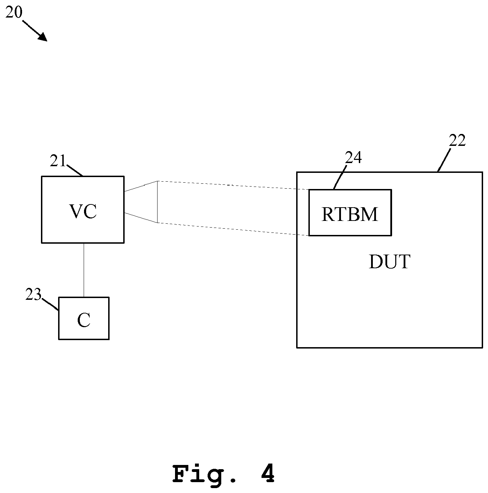

As it can be seen from step 111 of Fig. 3, the method may further comprise the step of proposing the optimum size and/or the optimum position of corresponding measurement regions with respect to vibration and/or movement to a user for real time image processing preferably on the basis of the performance capability of the measurement system. Finally, with respect to Fig. 4, a block diagram of an exemplary embodiment of a system 20 for real time video stabilization is shown. According to Fig. 4, the system 20 comprises a video camera 21, a device under test 22, and a controller 23 especially connected to the video camera 21. In this context, the video camera 21 is configured to monitor a region to be monitored 24 with respect to the device under test 22. Furthermore, the controller 23 is configured to define at least one reference region in the region to be monitored. Additionally, the controller 23 is further configured to use the at least one reference region for vibration and/or movement compensation.

Moreover, the video camera 21 is further configured to monitor at least one region of interest. It is noted that at least one of the region to be monitored 24, the device under test 22, the video camera 21, the at least one region of interest, or any combination thereof is subject to moving and/or vibrations.

As it can be seen from Fig. 4, the device under test 22 exemplarily comprises the region to be monitored 24. With respect to the device under test 22, it is noted that the device under test 22 may especially comprise or be a vehicle with a dash board to be monitored or a washing machine with a display to be monitored.

In other words, the region to be monitored 24 may especially comprise or be a dash board or a display preferably of a washing machine. Furthermore, the controller 23 may further be configured to choose the size of the at least one reference region depending on the computation speed of the video camera 21 and/or the controller 23.

In addition to this or as an alternative, the controller 23 may further be configured to choose the size of the at least one reference region depending on the maximum amplitude of respective vibration and/or movement. With respect to the at least one reference region, it is noted that the at least one reference region may preferably be marked with a sticker. In this context, it might be particularly advantageous if the sticker comprises or depicts a cross hair.

It is further noted that the at least one reference region may especially be different from the at least one region of interest. In addition to this or as an alternative, the region to be monitored 24 may especially comprise the at least one region of interest.

Further additionally or further alternatively, the at least one region of interest may especially comprise or be a light, preferably a warning light, more preferably a light on a dash board, most preferably a warning light on a dash board. Moreover, it might be particularly advantageous if the controller 23 is further configured to use the at least one reference region for vibration and/or movement compensation with respect to the at least one region of interest.

Additionally or alternatively, the controller 23 may further be configured to interpolate the vibration and/or movement compensation with respect to the at least one region of interest preferably in the case that there are defined at least two reference regions.

In addition to this or as an alternative, the controller 23 is further configured to warn a user if at least one of the region to be monitored, the at least one reference region, the at least one region of interest, or any combination thereof is too small for the respective amplitude of vibration and/or movement.

In this context, the system 20 may further comprise an optical output such as a light or a display and/or an acoustical output such as a speaker or a beeper. Accordingly, in this case, the controller 23 would especially be configured to output the above-mentioned warning with the aid of said optical and/or acoustical output.

Additionally or alternatively, the controller 23 may further be configured to warn a user if at least one of the region to be monitored, the at least one reference region, the at least one region of interest, or any combination thereof is too big for vibration and/or movement compensation in real time. In this case, the controller 23 may especially be configured to output said warning with the aid of the above-mentioned optical and/or acoustical output.

Further additionally or further alternatively, the controller 23 may further be configured to determine the maximum amplitude of respective vibration and/or movement and/or the maximum of the image refresh rate with respect to the video camera preferably on the basis of the total size of corresponding measurement regions with respect to vibration and/or movement.

Moreover, it might be particularly advantageous if the controller 23 is further configured to propose the optimum size and/or the optimum position of corresponding measurement regions with respect to vibration and/or movement to a user for real time image processing preferably on the basis of the performance capability of the video camera 21 and/or the controller 23. In this case, the controller 23 may especially be configured to output said proposal with the aid of the above-mentioned optical and/or acoustical output.

## Claims

1. A method for real time video stabilization, the method comprising the steps of:
monitoring a region to be monitored (24) with respect to a device under test (22) with the aid of a video camera (21) of a measurement system, wherein the device under test (24) comprises the region to be monitored and is subject to vibrations,
defining at least one reference region in the region to be monitored (24),
marking the at least one reference region with a sticker, and
using the at least one reference region for compensation of the vibrations of the device under test to stabilize an image of the video camera of the region to be monitored,
wherein the method further comprises the step of warning a user if the at least one reference region is too small for a respective amplitude of the vibrations.

2. The method according to claim 1,
wherein the device under test (22) comprises or is a vehicle with a dash board to be monitored or a home appliance with a display to be monitored.

3. The method according to claim 1 or 2,
wherein the method further comprises the step of choosing the size of the at least one reference region depending on the computation speed of the measurement system.

4. The method according to any of the claims 1 to 3, wherein the method further comprises the step of choosing the size of the at least one reference region depending on the maximum amplitude of the respective vibrations.

5. The method according to any of the claims 1 to 4, wherein the method further comprises at least one of the steps of
warning a user if the region to be monitored (24) or the at least one reference region, is too big for vibration compensation in real time.

6. A system (20) for real time video stabilization, the system (20) comprising:
a video camera (21),
a device under test (22), and
a controller (23),
wherein the video camera (21) is configured to monitor a region to be monitored (24) with respect to the device under test (22), wherein the device under test (24) comprises the region to be monitored and is subject to vibrations,
wherein the controller (23) is configured to define at least one reference region in the region to be monitored (24),wherein the at least one reference region is marked with a sticker, and
wherein the controller (23) is further configured to use the at least one reference region for compensation of the vibrations of the device under test to stabilize an image of the video camera of the region to be monitored,
wherein the controller (23) is further configured to warn a user if the at least one reference region is too small for a respective amplitude of the vibrations.

## Patentansprüche

1. Verfahren zur Echtzeitvideostabilisierung, wobei das Verfahren die folgenden Schritte umfasst:
Überwachen einer Region, die mit Bezug auf eine zu testende Vorrichtung (22) mithilfe einer Videokamera (21) eines Messsystems zu überwachen (24) ist, wobei die zu testende Vorrichtung (22) die zu überwachende Region umfasst und Vibrationen unterliegt,
Definieren von mindestens einer Referenzregion in der zu überwachenden (24) Region,
Markieren der mindestens einen Referenzregion mit einem Aufkleber, und
Verwenden der mindestens einen Referenzregion zur Kompensation der Vibrationen der zu testenden Vorrichtung, um ein Bild der Videokamera der zu überwachenden Region zu stabilisieren,
wobei das Verfahren ferner den Schritt des Warnens eines Benutzers, wenn die mindestens eine Referenzregion für eine jeweilige Amplitude der Vibrationen zu klein ist, umfasst.

2. Verfahren nach Anspruch 1,
wobei die zu testende Vorrichtung (22) ein Fahrzeug mit einem Armaturenbrett, das zu überwachen ist, oder ein Haushaltsgerät mit einer Anzeige, die zu überwachen ist, umfasst oder ein solches ist.

3. Verfahren nach Anspruch 1 oder 2,
wobei das Verfahren ferner den Schritt des Wählens der Größe der mindestens einen Referenzregion in Abhängigkeit von der Rechengeschwindigkeit des Messsystems umfasst.

4. Verfahren nach einem der Ansprüche 1 bis 3,
wobei das Verfahren ferner den Schritt des Wählens der Größe der mindestens einen Referenzregion in Abhängigkeit von der maximalen Amplitude der jeweiligen Vibrationen umfasst.

5. Verfahren nach einem der Ansprüche 1 bis 4,
wobei das Verfahren ferner mindestens einen der Schritte des Warnens eines Benutzers, wenn die zu überwachende (24) Region oder die mindestens eine Referenzregion für eine Vibrationskompensation in Echtzeit zu groß ist, umfasst.

6. System (20) zur Echtzeitvideostabilisierung, wobei das System (20) Folgendes umfasst:
eine Videokamera (21),
eine zu testende Vorrichtung (22), und
eine Steuerung (23),
wobei die Videokamera (21) dazu ausgelegt ist, eine mit Bezug auf die zu testende Vorrichtung (22) zu überwachende (24) Region zu überwachen, wobei die zu testende Vorrichtung (22) die zu überwachende Region umfasst und Vibrationen unterliegt,
wobei die Steuerung (23) dazu ausgelegt ist, in der zu überwachenden (24) Region mindestens eine Referenzregion zu definieren, wobei die mindestens eine Referenzregion mit einem Aufkleber markiert wird, und
wobei die Steuerung (23) ferner dazu ausgelegt ist, die mindestens eine Referenzregion zur Kompensation der Vibrationen der zu testenden Vorrichtung zu verwenden, um ein Bild der Videokamera der zu überwachenden Region zu stabilisieren,
wobei die Steuerung (23) ferner dazu ausgelegt ist, einen Benutzer zu warnen, wenn die mindestens eine Referenzregion für eine jeweilige Amplitude der Vibrationen zu klein ist.

## Revendications

1. Procédé pour stabilisation vidéo en temps réel, le procédé comprenant les étapes consistant à :
surveiller une région à surveiller (24) par rapport à un dispositif à l'essai (22) à l'aide d'une caméra vidéo (21) d'un système de mesure, dans lequel le dispositif à l'essai (22) comprend la région à surveiller et est soumis à des vibrations,
définir au moins une région de référence dans la région à surveiller (24),
marquer la au moins une région de référence avec un autocollant, et
utiliser la au moins une région de référence pour la compensation des vibrations du dispositif à l'essai pour stabiliser une image de la caméra vidéo de la région à surveiller,
dans lequel le procédé comprend en outre l'étape consistant à avertir un utilisateur si la au moins une région de référence est trop petite pour une amplitude respective des vibrations.

2. Procédé selon la revendication 1,
dans lequel le dispositif à l'essai (22) comprend ou est un véhicule avec un tableau de bord à surveiller ou un appareil domestique avec un affichage à surveiller.

3. Procédé selon la revendication 1 ou 2,
dans lequel le procédé comprend en outre l'étape consistant à choisir la taille de la au moins une région de référence en fonction de la vitesse de calcul du système de mesure.

4. Procédé selon l'une quelconque des revendications 1 à 3,
dans lequel le procédé comprend en outre l'étape consistant à choisir la taille de la au moins une région de référence en fonction de l'amplitude maximale des vibrations respectives.

5. Procédé selon l'une quelconque des revendications 1 à 4,
dans lequel le procédé comprend en outre au moins l'une des étapes consistant à
avertir un utilisateur si la région à surveiller (24) ou la au moins une région de référence est trop grande pour une compensation des vibrations en temps réel.

6. Système (20) de stabilisation vidéo en temps réel, le système (20) comprenant :
une caméra vidéo (21),
un dispositif à l'essai (22), et
une unité de commande (23),
dans lequel la caméra vidéo (21) est configurée pour surveiller une région à surveiller (24) par rapport au dispositif à l'essai (22), dans lequel le dispositif à l'essai (22) comprend la région à surveiller et est soumis à des vibrations,
dans lequel l'unité de commande (23) est configurée pour définir au moins une région de référence dans la région à surveiller (24), dans lequel la au moins une région de référence est marquée avec un autocollant, et
dans lequel l'unité de commande (23) est en outre configurée pour utiliser la au moins une région de référence pour la compensation des vibrations du dispositif à l'essai pour stabiliser une image de la caméra vidéo de la région à surveiller,
dans lequel l'unité de commande (23) est en outre configurée pour avertir un utilisateur si la au moins une région de référence est trop petite pour une amplitude respective des vibrations.
